# EUROPEAN PATENT APPLICATION

(11) **EP 3 073 792 A1**
(43) Date of publication of application: **28.09.2016**
(21) Application number: 16157056.9
(22) Date of filing: 24.02.2016
(51) Int. Cl.: H04W 52/02, G06F 21/32, G06F 3/0488

(54) **METHOD AND DEVICE FOR AWAKING ELEMENT**

(30) Priority: 26.03.2015 CN 201510138363
(71) Applicant: Xiaomi Inc., Beijing 100085 (CN)
(72) Inventor: YANG, Kun, 100085 Beijing (CN); TAO, Jun, 100085 Beijing (CN); JIANG, Zhongsheng, 100085 Beijing (CN)
(74) Representative: Delumeau, François Guy

(57) **Abstract**

The present disclosure provides a method and a device for awaking an element, which pertains to the field of mobile terminal. The method includes: acquiring (202) a touch signal by a touch component; detecting (204) whether the touch signal matches a preset condition; and if the touch signal matches the preset condition, awaking (206) a fingerprint recognition element.

## Description

### TECHNICAL FIELD

The present disclosure generally relates to the field of the mobile terminal, and more particularly, to a method and a device for awaking an element.

### BACKGROUND

Fingerprint recognition technology is used more and more widely in mobile terminals such as a smart phone, a tablet PC, a laptop and the like.

Taking the smart phone as an example, a fingerprint identification element is provided in a touch key of the smart phone. When a user enables the smart phone, his/her fingerprint is recognized by the fingerprint recognition element and the smart phone will be normally enabled after the fingerprint is recognized successfully. When the user performs sensitive operations, his/her own fingerprint is recognized by the fingerprint recognition element and the sensitive operations will be performed after the fingerprint is recognized successfully.

However, power consumption of the fingerprint recognition element is large. The mobile terminal is powered by a battery, so the fingerprint recognition element will seriously affect runtime of the mobile terminal. To solve the problem, the related art mainly adopts a measure of increasing battery capacity of the mobile terminal.

### SUMMARY

The embodiments of the present disclosure provide a method and a device for awaking an element. The technical solution is as below.

According to a first aspect of the embodiments of the present disclosure, there is provided a method for a mobile terminal to perform awaking an element, including steps of:
acquiring a touch signal by a touch component;
detecting whether the touch signal matches a preset condition; and
if the touch signal matches the preset condition, awaking a fingerprint recognition element.

In one possible embodiment, the touch component includes a touch screen and a touch key located at a peripheral side of the touch screen; and
the step of detecting whether the touch signal matches a preset condition includes:
detecting whether a first touch signal acquired by the touch screen matches a first preset condition; and
if the first touch signal matches the first preset condition, detecting whether a second touch signal acquired by the touch key matches a second preset condition.

In one possible embodiment, the method further includes a step of :
if the first touch signal matches the first preset condition, awaking the touch key which, after being awoken, acquires the second touch signal.

In one possible embodiment, the fingerprint recognition element is provided in the touch key; and
the method further includes steps of :
detecting, based on the second touch signal acquired by the touch key and a third touch signal acquired by the touch screen at the same time, whether a touch object is located in a correct collecting position of the fingerprint recognition element; and
if the touch object is located in the correct collecting position of the fingerprint recognition element, performing the awaking the fingerprint recognition element,
wherein the second touch signal and the third touch signal are respectively generated when the touch object contacts the touch key and the touch screen at the same time.
In one possible embodiment, an adjacent touch key is provided at a peripheral side of the touch key; and
the method further includes steps of :
   detecting, based on the second touch signal acquired by the touch key and a fourth touch signal acquired by the adjacent touch key at the same time, whether the touch object is located in the correct collecting position of the fingerprint recognition element; and
   if the touch object is located in the correct collecting position of the fingerprint recognition element, performing the awaking the fingerprint recognition element,
   wherein the second touch signal and the fourth touch signal are respectively generated when the touch object contacts the touch key and the adjacent touch key at the same time.

In one possible embodiment, the method further includes a step of:
setting an entire or a partial marginal region of the touch screen as a shielding region when the touch screen acquires the first touch signal.

According to a second aspect of the present disclosure, there is provided a device for awaking an element, including:
an acquiring module configured to acquire a touch signal by a touch component;
a detecting module configured to detect whether the touch signal matches a preset condition; and
an awaking module configured to, if the touch signal matches the preset condition, awake a fingerprint recognition element.
In one possible embodiment, the touch component includes a touch screen and a touch key located at a peripheral side of the touch screen; and
the detecting module includes:
   a first detecting sub-module configured to detect whether a first touch signal acquired by the touch screen matches a first preset condition; and
   a second detecting sub-module configured to, if the first touch signal matches the first preset condition, detect whether a second touch signal acquired by the touch key matches a second preset condition.

In one possible embodiment, the device further includes:
a key awaking sub-module configured to, if the first touch signal matches the first preset condition, awake the touch key which, after being awoken, acquires the second touch signal.

In one possible embodiment, the fingerprint recognition element is provided in the touch key;
the device further includes:
a first detecting module configured to detect, based on the second touch signal acquired by the touch key and a third touch signal acquired by the touch screen at the same time, whether a touch object is located in a correct collecting position of the fingerprint recognition element; and
the awaking module configured to awake the fingerprint recognition element when the touch object is located in the correct collecting position of the fingerprint recognition element,
wherein the second touch signal and the third touch signal are respectively generated when the touch object contacts the touch key and the touch screen at the same time.

In one possible embodiment, an adjacent touch key is provided at a peripheral side of the touch key; and
the device further comprises:
a second detecting module configured to, detect, based on the second touch signal acquired by the touch key and a fourth touch signal acquired by the adjacent touch key (125) at the same time, whether the touch object is located in the correct collecting position of the fingerprint recognition element; and
the awaking module configured to, when the touch object is located in the correct collecting position of the fingerprint recognition element, perform the awaking the fingerprint recognition element,
wherein the second touch signal and the fourth touch signal are respectively generated when the touch object contacts the touch key and the adjacent touch key at the same time.

In one possible embodiment, the device further includes:
a shielding module configured to set an entire or a partial marginal region of the touch screen as a shielding region when the touch screen acquires the first touch signal.

According to a third aspect of the present disclosure, there is provided a device for awaking an element, including:
a processor; and
a memory for storing instructions executable by the processor;
wherein the processor is configured to perform:
acquiring a touch signal by a touch component;
detecting whether the touch signal matches a preset condition; and
if the touch signal matches the preset condition, awaking a fingerprint recognition element.

The advantages and features of the devices according to the embodiments of the present disclosure are the same with those of the above described method and will not be repeated here.

Alternatively, the steps of the method for a mobile terminal to perform awaking an element are determined by computer program instructions.

Consequently, according to an fourth aspect, the invention is also directed to a computer program for executing the steps of the method for a mobile terminal to perform awaking an element as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical scheme according to embodiments of the present disclosure may have the following beneficial effects:

A fingerprint recognition element is awoken when a touch signal acquired by the touch component matches a preset condition. According to the invention, the fingerprint recognition element is in a dormant state (e.g. sleeping mode) before it is awoken. A fingerprint recognition element in a dormant state is not able to receive or react to any touch signal. In other words, the function of fingerprint recognition of a fingerprint recognition element in a dormant state is disabled. Only when a fingerprint recognition element is awaken, its fingerprint recognition function is enabled and thus the fingerprint recognition element is able to receive a touch signal and react to the received touch signal. Thus the invention solves the problem that the fingerprint recognition element will seriously affect the runtime of the mobile terminal. Thereby, it achieves the effect that the fingerprint recognition element is awoken only in partial occasions and it is in a dormant state at most time, which will not seriously affect the runtime of the mobile terminal.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a block diagram illustrating a mobile terminal according to an exemplary embodiment.
Fig. 2 is a flow chart showing a method for awaking an element according to an exemplary embodiment.
Fig. 3A is a flow chart showing a method for awaking an element according to another exemplary embodiment.
Fig. 3B is a schematic diagram showing a region involved in the method for awaking an element as shown in Fig. 3A.
Fig. 4 is a flow chart showing a method for awaking an element according to another exemplary embodiment.
Fig. 5A is a schematic diagram showing an internal structure of a mobile terminal according to an exemplary embodiment.
Fig. 5B is a schematic diagram showing an internal structure of a mobile terminal according to another exemplary embodiment.
Fig. 6 is a schematic diagram showing a region involved in the method for awaking an element according to another exemplary embodiment.
Fig. 7 is a flow chart showing a method for awaking an element according to another exemplary embodiment.
Fig. 8 is a schematic diagram showing an implementation involved in the method for awaking an element according to another exemplary embodiment.
Fig. 9 is a flow chart showing a method for awaking an element according to another exemplary embodiment.
Fig. 10 is a schematic diagram showing an implementation involved in the method for awaking an element according to another exemplary embodiment.
Fig. 11 is a block diagram illustrating a device for awaking an element according to an exemplary embodiment.
Fig. 12 is a block diagram illustrating a device for awaking an element according to another exemplary embodiment.
Fig. 13 is a block diagram illustrating a device for awaking an element according to another exemplary embodiment.

Through the above accompanying drawings, the specific embodiments of the disclosure have been shown, for which a more detailed description will be given as below. These drawings and textual description are not intended to limit the scope of the concept of the disclosure in any manner, but to explain the concept of the disclosure to those skilled in the art through particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

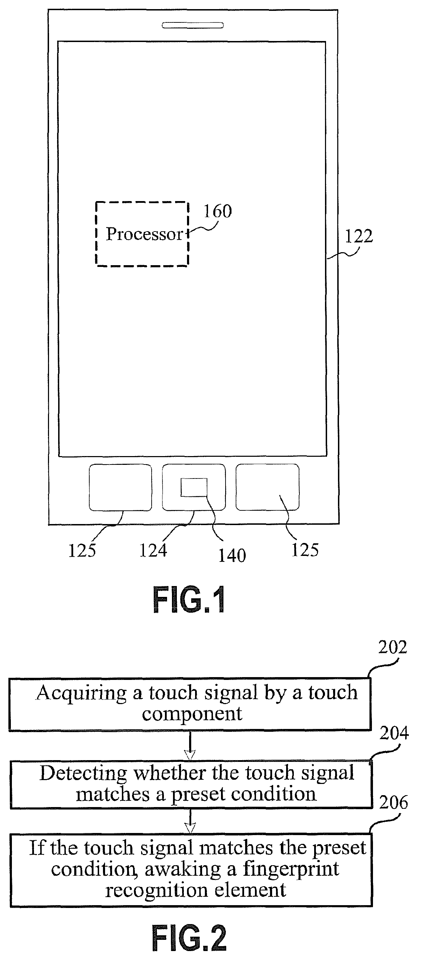

Fig. 1 is a block diagram illustrating a mobile terminal according to an exemplary embodiment. The mobile terminal 100 includes a touch screen 122, a touch key 124 provided at a peripheral side of the touch screen 122, a fingerprint recognition element 140 and a processor 160.

The touch screen 122 and the touch key 124 may be generally called as touch components. Operation of the touch screen 122 and the touch key 124 is controlled by a touch IC (integrated circuit), which is not shown in Fig. 1.

Generally, the touch key 124 is a key provided at the center below the touch screen 122. The front of the mobile terminal may include only one key, i.e. the touch key 124. Alternatively, the front of the mobile terminal includes three keys, i.e. the touch key 124 at the center, and the other touch keys 125 at two sides of the touch key 124. To simplify the description herein, Fig. 1 illustrates that the front of the mobile terminal includes three keys, as an example, but the present disclosure is not limited thereto.

The fingerprint recognition element 140 is provided in the touch key 124. The fingerprint recognition element 140 has the ability to identify the fingerprint of the user. In other embodiments, the fingerprint recognition element 140 may also be provided on the back of the mobile terminal.

Both of the touch component and the fingerprint recognition element 140 are electrically connected with the processor 160.

Fig. 2 is a flow chart showing a method for awaking an element according to an exemplary embodiment. The present embodiment is illustrated by taking an example that applies the method for awaking an element to the mobile terminal as shown in Fig. 1. The method includes the following steps.

In step 202, a touch signal is acquired by a touch component.

In step 204, it is detected whether the touch signal matches a preset condition.

In step 206, if the touch signal matches the preset condition, a fingerprint recognition element is awoken.

Accordingly, in the method for awaking an element provided by the present embodiment, a fingerprint recognition element is awoken when a touch signal acquired by the touch component matches a preset condition. In this document, the fingerprint recognition element is in a dormant state (e.g. sleeping mode) before it is awoken. A fingerprint recognition element in a dormant state is not able to receive or react to any touch signal. In other words, the function of fingerprint recognition of a fingerprint recognition element in a dormant state is disabled. Only when a fingerprint recognition element is awoken, its fingerprint recognition function is enabled and thus the fingerprint recognition element is able to receive a touch signal and react to the received touch signal. Thus the invention solves the problem that the fingerprint recognition element will seriously affect the runtime of the mobile terminal. Thereby, it achieves the effect that the fingerprint recognition element is awoken only in partial occasions and it is in a dormant state at most time, which will not seriously affect the runtime of the mobile terminal.

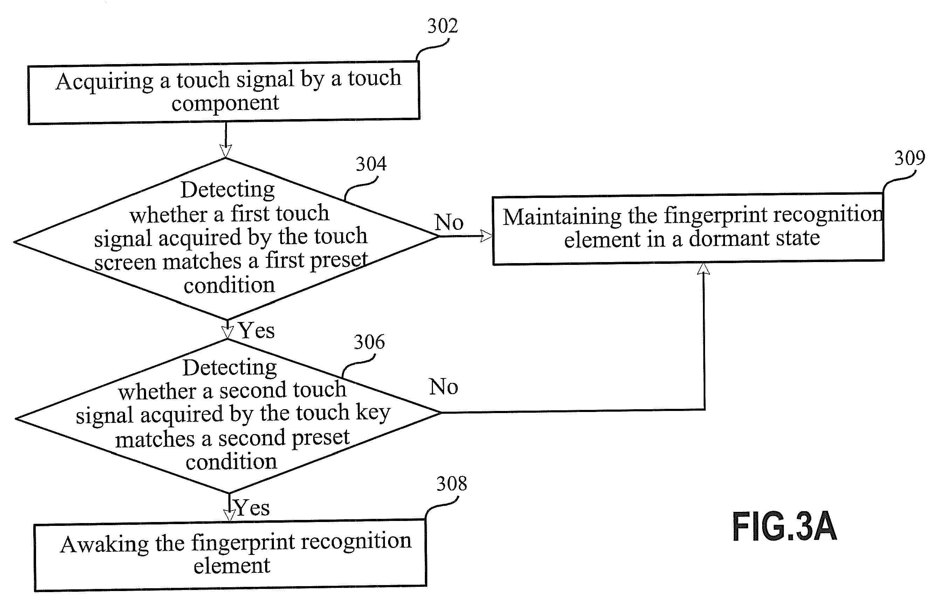

Fig. 3A is a flow chart showing a method for awaking an element according to another exemplary embodiment. The present embodiment is illustrated by taking an example that applies the method for awaking an element to the mobile terminal as shown in Fig. 1. The method includes the following steps.

In step 302, a first touch signal is acquired by a touch screen.

When the user touches the touch screen, the mobile terminal collects the first touch signal by the touch screen.

When the user touches the touch key, the mobile terminal collects the second touch signal by the touch key.

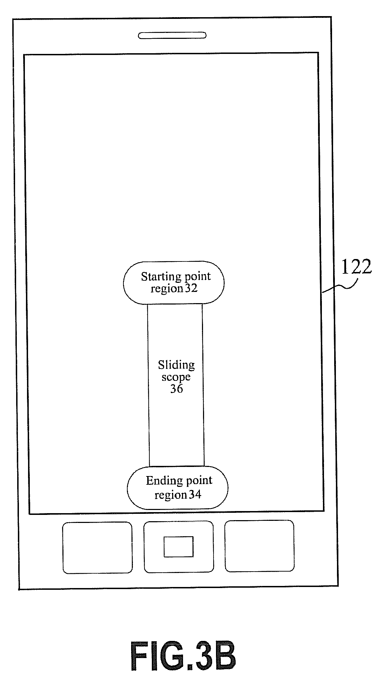

Combining with shown in Fig. 3B, the finger of the user slides downward from the center of the touch screen 122 (e.g. along the sliding scope 36 from the starting point region 32 to the ending point region 34) to the touch key 124 and stays on the touch key 124. The mobile terminal collects the first touch signal by the touch screen 122, and then collects the second touch signal by the touch key 124.

In step 304, it is detected whether a first touch signal acquired by the touch screen matches a first preset condition.

The first preset condition includes, but not limited to: a single touch object slides from a starting point region to an ending point region within the sliding scope.

For example, the starting point region may be an elliptical region 32 located at the center of the touch screen 122 as shown in Fig. 3B, the ending point region may be an elliptical region 34 located at the bottom of the touch screen 122 as shown in Fig. 3B, and the sliding scope is a rectangular region 36 located between the ellipse region 32 and the ellipse region 34.

If the first touch signal matches the first preset condition, it proceeds to step 306; and if the first touch signal does not match the first preset condition, it proceeds to step 309.

In step 306, if the first touch signal matches the first preset condition, it is detected whether a second touch signal acquired by the touch key matches a second preset condition.

The second preset condition includes, but not limited to: a signal amount generated when the touch object continuously touches on the touch key is larger than a preset threshold. The signal amount is related to a contact area and a duration period of the touch object on the touch key.

The second preset condition may detect whether the finger of the user stays on the touch key.

If the second touch signal matches the second preset condition, it proceeds to step 308; and if the second touch signal does not match the second preset condition, it proceeds to step 309.

In step 308, if the second touch signal matches the second preset condition, the fingerprint recognition element is awoken.

The fingerprint recognition element is in a dormant state when the mobile terminal is in a standby state. The fingerprint recognition element is awoken when the touch signals of the user match the preset conditions. The awoken fingerprint recognition element performs the fingerprint recognition function.

In step 309, the fingerprint recognition element is maintained in a dormant state.

Accordingly, in the method for awaking an element provided by the present embodiment, a first touch signal is collected by the touch screen firstly, then a second touch signal is collected by the touch key, and the fingerprint recognition element is awoken when both of the first touch signal and the second touch signal match the preset condition; and it solves the problem that the fingerprint recognition element will seriously affect the runtime of the mobile terminal. Thereby, it achieves the effect that the fingerprint recognition element is awoken only in partial occasions and it is in a dormant state at most time, which will not seriously affect the runtime of the mobile terminal.

The method for awaking an element provided by the present embodiment skillfully designs a second preset condition, such that, when the finger of the user stays on the touch key, i.e. the finger of the user is in a position needed when the fingerprint recognition element works, the fingerprint recognition element is awoken to perform fingerprint recognition. It avoids that the movement of the finger of the user affects the fingerprint recognition, thus improving accuracy of the fingerprint recognition.

In an embodiment, the touch screen is in a screen-extinguished detecting state, i.e. an operation state with low power consumption, when it collects the first touch signal.

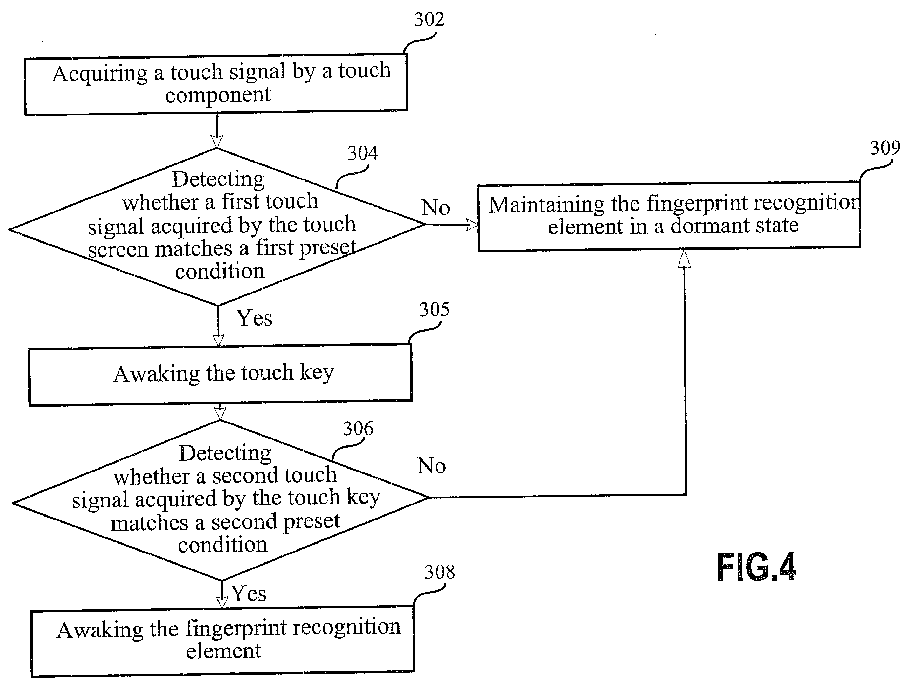

In another embodiment, the following steps may also be included before step 306, as shown in Fig. 4.

In step 305, the touch key is awoken.

The touch key is also initially in a dormant state. A touch key in a dormant state is not able to acquire a touch signal. When the first touch signal acquired by the touch screen matches the first preset condition, the mobile terminal awakes the touch key, wherein the touch key is used to, after being awoken, acquire the second touch signal.

The method for awaking an element provided by the present embodiment makes the touch key be also initially in a dormant state, which may better reduce power consumption and lengthen the runtime of the mobile terminal.

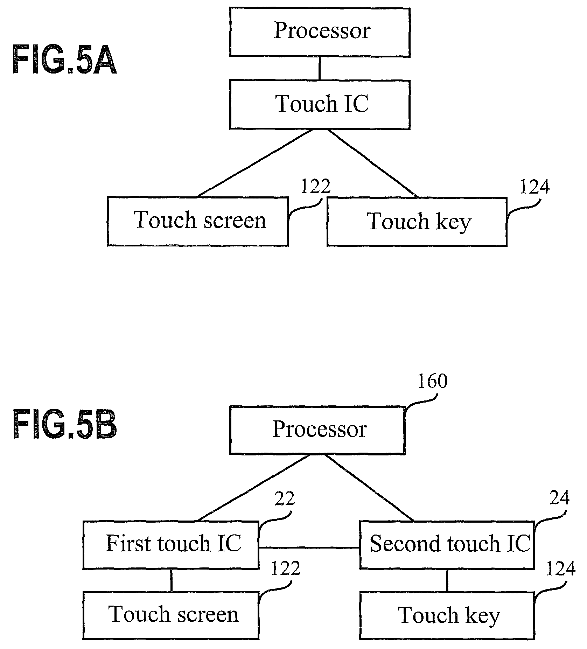

It is to be noted that, the touch screen 122 and the touch key 124 may be controlled by the same touch IC, as shown in Fig. 5A; the touch screen 122 and the touch key 124 may also be controlled by different touch ICs, as shown in Fig. 5B, wherein the touch screen 122 is connected with the first touch IC 22, the touch key 124 is connected with the second touch IC 24, and the first touch IC 22 and the second touch IC 24 are connected with the processor 160 respectively.

When the touch screen 122 and the touch key 124 are controlled by the same touch IC, the step 304 may be performed by the processor of the mobile terminal or the touch IC. When the step 304 is performed by the touch IC, if the first touch signal matches the first touch condition, the touch IC directly awakes the touch key 124, which does not need the processor 160 to participate in. The processor 160 may maintain a dormant state in this process to reduce the power consumption as much as possible.

When the touch screen 122 and the touch key 124 are controlled by different touch ICs, the step 304 may be performed by the processor of the mobile terminal or the first touch IC 22. When the step 304 is performed by the first touch IC 22, if the first touch signal matches the first touch condition, the first touch IC 22 communicates with the second touch IC 24 to awake the touch key 124 by the transfer of the processor 160 or the communication between ICs. When the first touch IC 22 and the second touch IC 24 use the communication between ICs, the process does not need the processor 160 to participate in. The processor 160 may maintain a dormant state in this process to reduce the power consumption as much as possible.

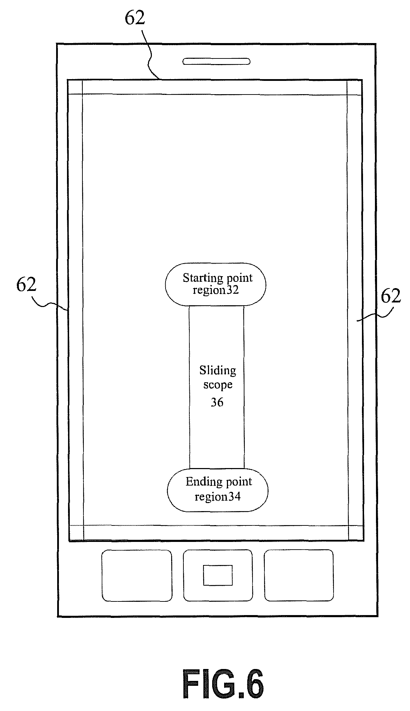

In another embodiment, when the user grabs the mobile terminal, the edge of the finger may possibly falsely contact the edge region of the touch screen 122. The mobile terminal sets an entire or a partial marginal region of the touch screen 122 as a shielding region when the touch screen 122 acquires the first touch signal. As shown in Fig. 6, in the process of the touch screen 122 acquiring the first touch signal, the four edge regions 62 of the touch screen 122 are all set as shielding regions. At this time, even if the finger of the user falsely contacts the edge region 62, it will not affect the mobile terminal to normally detect whether the first touch signal matches the first preset condition.

The size of the edge regions 62 may be set in advance. In this document, the term "shielding region" means a region on which touch signals are not collected or ignored. For example, one implementation of the shielding region is: not to collect the touch signal in the shielding region; another implementation of the shielding region is: to collect the touch signal in the shielding region, but ignore the collected touch signal in the shielding region.

The collecting region (i.e. the region enabling the collecting or receiving of touch signals) of the fingerprint recognition element is limited, which is usually smaller than the key area of the touch key. Therefore, when the finger of the user stays on the touch key, the position of the finger may not be completely in the collecting region of the fingerprint recognition element, causing that the fingerprint recognition cannot be finished smoothly. For this purpose, please refer to the following embodiments.

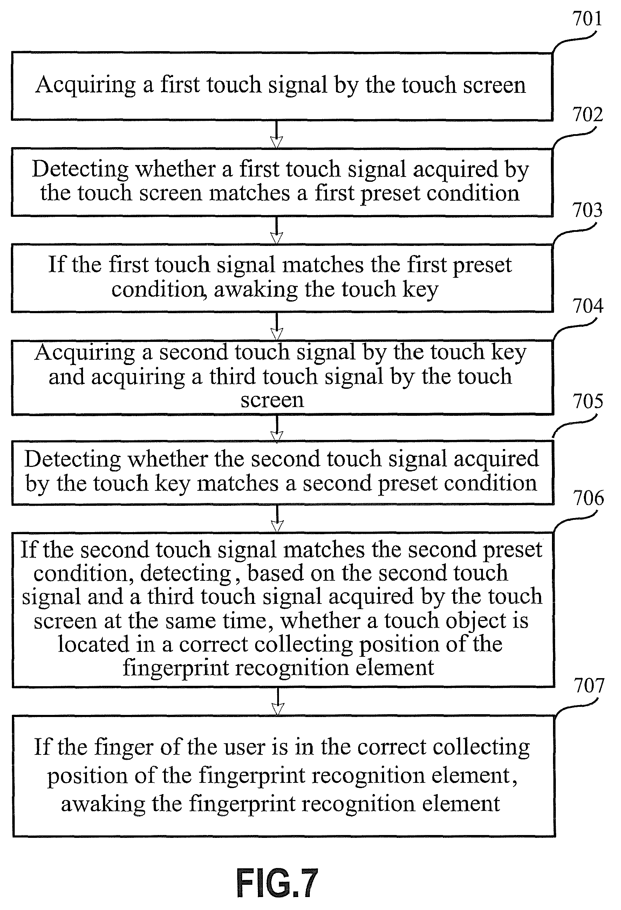

Fig. 7 is a flow chart showing a method for awaking an element according to another exemplary embodiment. The present embodiment is illustrated by taking an example that applies the method for awaking an element to the mobile terminal as shown in Fig. 1 and 5B. The method includes the following steps.

In step 701, a first touch signal is acquired by the touch screen.

The mobile terminal is in a standby state, wherein the processor and the touch key are both in a dormant state. The touch screen is in a screen-extinguished detecting state with low power consumption.

When the finger of the user touches the touch screen, the mobile terminal acquires the first touch signal by the touch screen. The touch screen may be in a screen-extinguished detecting state with low power consumption.

Combining with shown in Fig. 3B, the finger of the user slides downward from the center of the touch screen 122, and the mobile terminal acquires the first touch signal by the touch screen 122.

In step 702, it is detected whether the first touch signal acquired by the touch screen matches a first preset condition.

The first touch IC connected with the touch screen detects whether the first touch signal acquired by the touch screen matches the first preset condition.

The first preset condition includes, but not limited to: a single touch object slides from a starting point region to an ending point region within the sliding scope.

In step 703, if the first touch signal matches the first preset condition, the touch key is awoken.

When the first touch signal matches the first preset condition, the first touch IC sends an awaking signal to the second touch IC through the communication between ICs. The second touch IC awakes the touch key based on the awaking signal. The touch key, after being awoken, acquires the second touch signal.

It is to be noted that, the first touch signal and the second touch signal are usually generated by one sliding operation of the user. The sliding operation is a signal that slides downward from the center of the touch screen 122 to the touch key 124 and stays thereon.

In step 704, a second touch signal is acquired by the touch key and a third touch signal is acquired by the touch screen.

When the finger of the user slides to the touch key, the mobile terminal acquires the second touch signal by the touch key.

Because the distance between the touch screen and the touch key is short, the most part of the finger is on the touch key and a small part of the finger is on the touch screen. That is, when the touch key acquires the second touch signal, the touch screen may acquire the third touch signal at the same time. The second touch signal and the third touch signal are touch signals respectively generated when the touch object (the finger) contacts the touch key and the touch screen at the same time.

In step 705, it is detected whether the second touch signal acquired by the touch key matches a second preset condition.

The second touch IC connected with the touch key detects whether the second touch signal acquired by the touch key matches the second preset condition.

The second preset condition includes, but not limited to: the signal amount generated when the touch object continuously touches on the touch key is larger than a preset threshold.

The second preset condition may detect whether the finger of the user stays on the touch key.

In step 706, if the second touch signal matches the second preset condition, it is detected, based on the second touch signal acquired by the touch key and a third touch signal acquired by the touch screen at the same time, whether a touch object is located in a correct collecting position of the fingerprint recognition element. In the document, the term "correct collecting position of a fingerprint recognition element" means a position on the fingerprint recognition element enabling the collecting or receiving of touch signals.

When the most part of the finger is on the touch key and a small part of the finger is on the touch screen, the mobile terminal recognizes the position of the finger of the user at a certain degree based on the third touch signal generated on the touch screen by the finger.

That is, the mobile terminal detects, based on the second touch signal acquired by the touch key and a third touch signal acquired by the touch screen at the same time, whether a touch object is located in a correct collecting position of the fingerprint recognition element.

When the second touch signal matches the second preset condition, the second touch IC sends a confirmation signal to the first touch IC. The first touch IC detects whether the third touch signal is within a preset touch scope. If it is within the preset touch scope, the finger of the user is treated as being in the correct collecting position of the fingerprint recognition element; if it goes beyond the preset touch scope, the finger of the user is treated as being not in the correct collecting position of the fingerprint recognition element. Wherein the processor may also perform the detection operation of the second touch IC to the second touch signal and the detection operation of the first touch IC to the third touch signal.

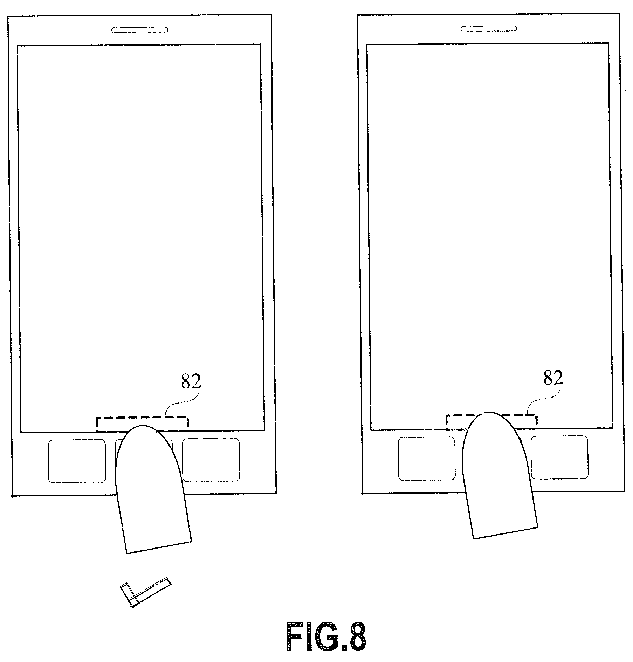

The size and position of the touch scope is determined by the technicians based on a plurality of actual simulations. Combining with shown in Fig. 8, the touch scope is usually the edge region on the touch screen adjacent to the touch key. If the finger of the user is within the touch scope, the finger of the user is treated as being in the correct collecting position of the fingerprint recognition element; and if the finger of the user goes beyond the touch scope, the finger of the user is treated as being not in the correct collecting position of the fingerprint recognition element.

In step 707, if the finger of the user is in the correct collecting position of the fingerprint recognition element, the fingerprint recognition element is awoken.

When the second touch signal matches the second touch condition and the finger of the user is in the correct collecting position of the fingerprint recognition element, the fingerprint recognition element is awoken. The awoken fingerprint recognition element performs the fingerprint recognition function.

Accordingly, in the method for awaking an element provided by the present embodiment, the detection is performed by combining the second touch signal and the third touch signal, so that the fingerprint recognition element is awoken only when the finger of the user is in the correct collecting position of the fingerprint recognition element, which may reduce the generation of failure events of the fingerprint recognition, and further reduce the power consumption.

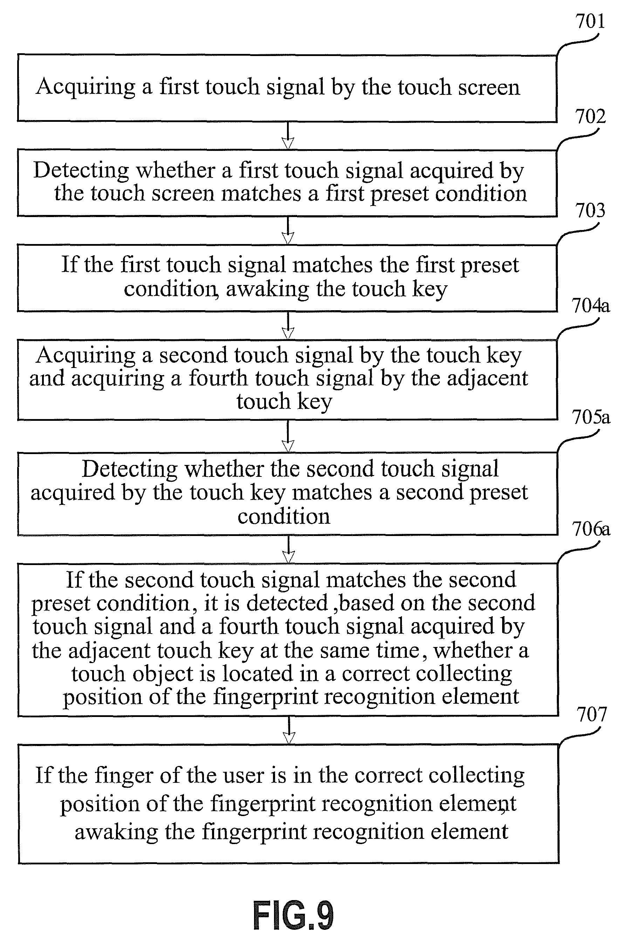

In another implementation, the steps 704-706 may be replaced by steps 704a-706a, as shown in Fig. 9:
In step 704a, the second touch signal is acquired by the touch key, and a fourth touch signal is acquired by the adjacent touch key.

When the finger of the user slides to the touch key, the mobile terminal acquires the second touch signal by the touch key.

Because the distance between the touch screen and the touch key is short, the most part of the finger is on the middle touch key, and a small part of the finger is on the adjacent touch screen. That is, when the touch key acquires the second touch signal, the adjacent touch key may acquire the fourth touch signal at the same time. The second touch signal and the fourth touch signal are touch signals respectively generated when the touch object (the finger) contacts the touch key and the touch screen at the same time.

In step 705a, it is detected whether the second touch signal acquired by the touch key matches a second preset condition.

The second touch IC connected with the touch key detects whether the second touch signal acquired by the touch key matches the second preset condition.

The second preset condition includes, but not limited to: the signal amount generated when the touch object continuously touches on the touch key is larger than a preset threshold.

The second preset condition may detect whether the finger of the user stays on the middle touch key.

In step 706a, if the second touch signal matches the second preset condition, it is detected, based on the second touch signal acquired by the touch key and the fourth touch signal acquired by the adjacent touch key at the same time, whether the touch object is located in a correct collecting position of the fingerprint recognition element.

When the most part of the finger is on the touch key, and a small part of the finger is on the adjacent touch key, the processor of the mobile terminal may recognize the position of the finger of the user at a certain degree based on the fourth touch signal generated on the adjacent touch key by the finger.

That is, the processor of the mobile terminal detects, based on the second touch signal and a fourth touch signal acquired by the adjacent touch key at the same time, whether a touch object is located in a correct collecting position of the fingerprint recognition element.

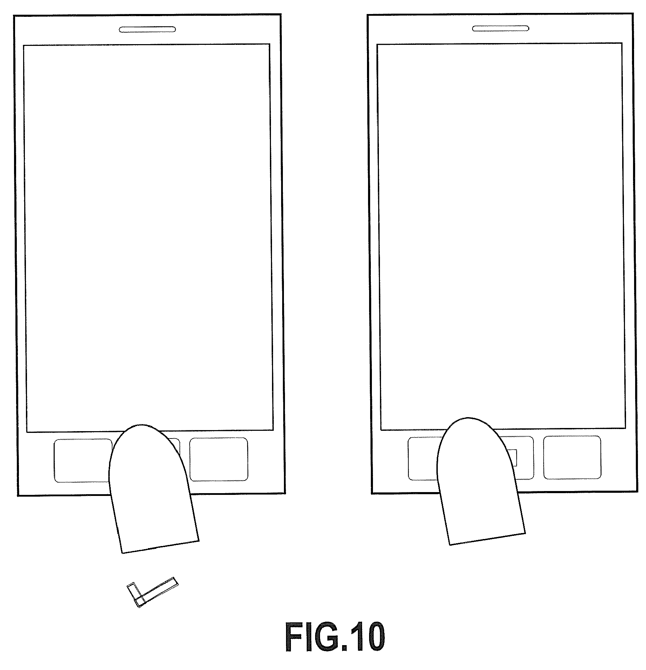

When the second touch signal matches the second preset condition, the second touch IC further detects whether the signal amount of the fourth touch signal is smaller than a preset threshold. If it is smaller than the preset threshold, it is treated as that the part of the finger of the user being on the adjacent touch key is small, and the finger of the user is in the correct collecting position of the fingerprint recognition element; if it goes beyond the preset threshold, it is treated as that the part of the finger of the user being on the adjacent touch key is large, and the finger of the user is not in the correct collecting position of the fingerprint recognition element. Wherein the processor may also perform the detection operation of the second touch IC to the second touch signal and the fourth touch signal. The process may be shown as Fig. 10.

In the following embodiments of devices according to the present disclosure, the devices may be configured to perform the method in the above embodiments of the present disclosure. Details not disclosed in the embodiments of devices may be referred to the embodiments of methods.

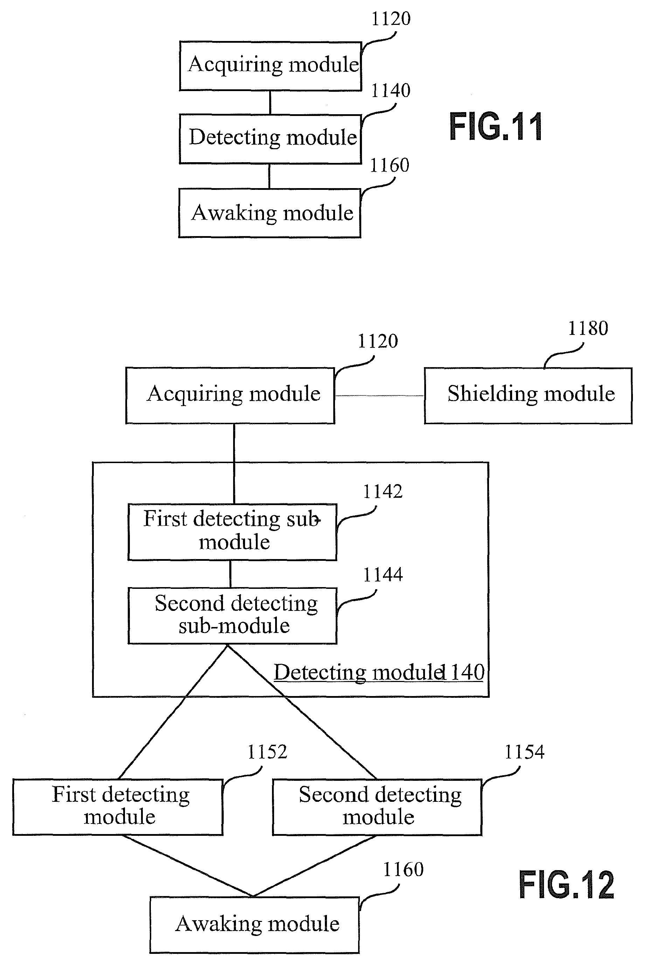

Fig. 11 is a block diagram illustrating a device for awaking an element according to an exemplary embodiment. The device for awaking an element may constitute all or a part of the mobile terminal by software, hardware or a combination thereof. The device for awaking an element may include:
an acquiring module 1120 configured to acquire a touch signal by a touch component;
a detecting module 1140 configured to detect whether the touch signal matches a preset condition; and
an awaking module 1160 configured to, if the touch signal matches the preset condition, awake a fingerprint recognition element.

Accordingly, in the device for awaking an element provided by the present embodiment, a fingerprint recognition element is awoken when a touch signal acquired by the touch component matches a preset condition; and it solves the problem that the fingerprint recognition element will seriously affect the runtime of the mobile terminal. Thereby, it achieves the effect that the fingerprint recognition element is awoken only in partial occasions and it is in a dormant state at most time, which will not seriously affect the runtime of the mobile terminal.

Fig. 12 is a block diagram illustrating a device for awaking an element according to another exemplary embodiment. The device for awaking an element may constitute all or a part of the mobile terminal by software, hardware or a combination thereof. The device for awaking an element may include:
an acquiring module 1120 configured to acquire a touch signal by a touch component;
a detecting module 1140 configured to detect whether the touch signal matches a preset condition; and
an awaking module 1160 configured to, if the touch signal matches the preset condition, awake a fingerprint recognition element.

For example, the touch component includes a touch screen and a touch key located at a peripheral side of the touch screen;
the detecting module 1140 includes:
a first detecting sub-module 1142 configured to detect whether a first touch signal acquired by the touch screen matches a first preset condition; and
a second detecting sub-module 1144 configured to, if the first touch signal matches the first preset condition, detect whether a second touch signal acquired by the touch key matches a second preset condition.

For example, the device further includes:
a key awaking sub-module 1143 configured to, if the first touch signal matches the first preset condition, awake the touch key which, after being awoken, acquires the second touch signal.

For example, the fingerprint recognition element is provided in the touch key;

As one possible implementation, the device further includes:
a first detecting module 1152 configured to detect, based on the second touch signal and a third touch signal acquired by the touch screen at the same time, whether a touch object is located in a correct collecting position of the fingerprint recognition element; and
the awaking module 1160 configured to awake the fingerprint recognition element when the touch object is located in the correct collecting position of the fingerprint recognition element;
wherein the second touch signal and the third touch signal are touch signals respectively generated when the touch object contacts the touch key and the touch screen at the same time.

In another possible implementation, the device further includes:
a second detecting module 1154 configured to detect, based on the second touch signal and a fourth touch signal acquired by the adjacent touch key at the same time, whether the touch object is located in the correct collecting position of the fingerprint recognition element; and
the awaking module 1160 configured to, when the touch object is located in the correct collecting position of the fingerprint recognition element, perform steps of the awaking the fingerprint recognition element;
wherein the second touch signal and the fourth touch signal are touch signals respectively generated when the touch object contacts the touch key and the adjacent touch key at the same time.

For example, the device further includes:
a shielding module 1180 configured to set an entire or a partial marginal region of the touch screen as a shielding region when the touch screen acquires the first touch signal.

With respect to the devices in the above embodiments, the specific manners for performing operations for individual modules therein have been described in detail in the embodiments regarding the relevant methods, which will not be elaborated herein.

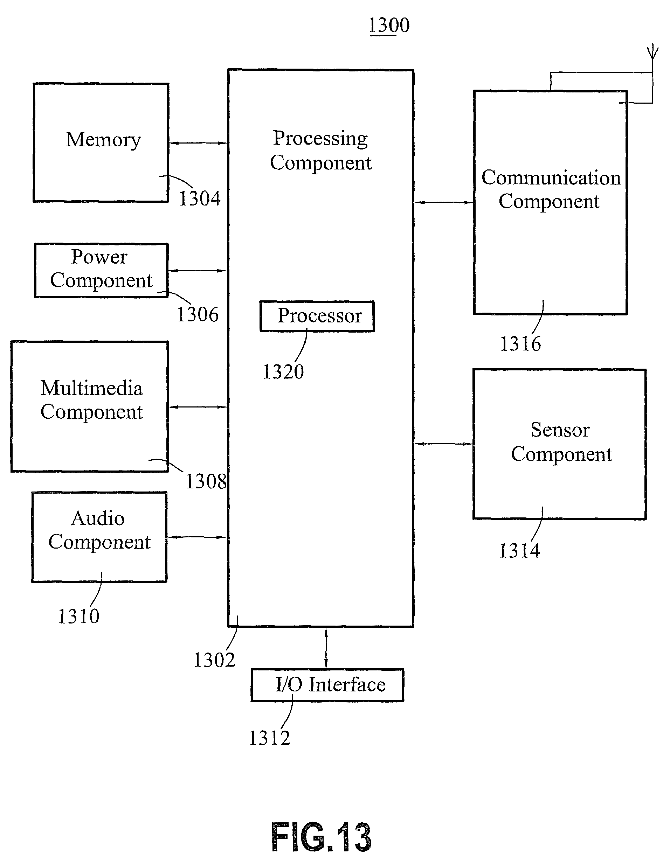

As shown in Fig. 13 is a device 1300 for awaking an element according to an exemplary embodiment. For example, the device 1300 may be a mobile phone, a computer, a digital broadcast terminal, a messaging device, a gaming console, a tablet, a medical device, exercise equipment, a personal digital assistant, and the like.

Referring to Fig. 13, the device 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the device 1300, such as the operations associated with display, telephone calls, data communications, camera operations, and recording operations. The processing component 1302 may include one or more processors 1320 to execute instructions to perform all or part of the steps in the above described methods. Moreover, the processing component 1302 may include one or more modules which facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the device 1300. Examples of such data include instructions for any applications or methods operated on the device 1300, contact data, phonebook data, messages, pictures, video, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the device 1300. The power component 1306 may include a power management system, one or more power sources, and any other components associated with the generation, management, and distribution of power in the device 1300.

The multimedia component 1308 includes a screen providing an output interface between the device 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1308 includes a front camera and/or a rear camera. The front camera and the rear camera may receive an external multimedia datum while the device 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone ("MIC") configured to receive an external audio signal when the device 1300 is in an operation mode, such as a call mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and peripheral interface modules, such as a keyboard, a click wheel, keys, and the like. The keys may include, but are not limited to, a home key, a volume key, a starting key, and a locking key. The key may be a touch key, and a fingerprint recognition element may be provided in the touch key.

The sensor component 1314 includes one or more sensors to provide status assessments of various aspects of the device 1300. For instance, the sensor component 1314 may detect an open/closed status of the device 1300, relative positioning of components, e.g., the display and the keypad, of the device 1300, a change in position of the device 1300 or a component of the device 1300, a presence or absence of user contact with the device 1300, an orientation or an acceleration/deceleration of the device 1300, and a change in temperature of the device 1300. The sensor component 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a pressure sensor, or a temperature sensor.

The communication component 1316 is configured to facilitate communication, wired or wirelessly, between the device 1300 and other devices. The device 1300 may access a wireless network based on a communication standard, such as WiFi, 2G, or 3G, or a combination thereof. In one exemplary embodiment, the communication component 1316 receives a broadcast signal or broadcast associated information from an external broadcast management system via a broadcast channel. In one exemplary embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1304, executable by the processor 1320 in the device 1300, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium is executed by the processor of the device 1300, enables the device 1300 to perform the method provided by the above-mentioned embodiments.

## Claims

1. A method for a mobile terminal to perform awaking an element, comprising steps of:
acquiring (202) a touch signal by a touch component;
detecting (204) whether the touch signal matches a preset condition; and
if the touch signal matches the preset condition, awaking (206) a fingerprint recognition element.

2. The method of claim 1, wherein the touch component comprises a touch screen and a touch key located at a peripheral side of the touch screen; and
the step of detecting (204) whether the touch signal matches a preset condition comprises steps of:
detecting (304) whether a first touch signal acquired by the touch screen matches a first preset condition; and
if the first touch signal matches the first preset condition, detecting (306) whether a second touch signal acquired by the touch key matches a second preset condition.

3. The method of claim 2, further comprising a step of:
if the first touch signal matches the first preset condition, awaking (305) the touch key which, after being awoken, acquires the second touch signal.

4. The method of claim 2 or 3, wherein the fingerprint recognition element is provided in the touch key; and
the method further comprises:
detecting (706), based on the second touch signal acquired by the touch key and a third touch signal acquired by the touch screen at the same time, whether a touch object is located in a correct collecting position of the fingerprint recognition element; and
if the touch object is located in the correct collecting position of the fingerprint recognition element, performing (707) the awaking the fingerprint recognition element,
wherein the second touch signal and the third touch signal are respectively generated when the touch object contacts the touch key and the touch screen at the same time.

5. The method of claim 2 or 3, wherein an adjacent touch key is provided at a peripheral side of the touch key; and
the method further comprises steps of :
detecting (706a), based on the second touch signal acquired by the touch key and a fourth touch signal acquired by the adjacent touch key at the same time, whether the touch object is located in the correct collecting position of the fingerprint recognition element; and
if the touch object is located in the correct collecting position of the fingerprint recognition element, performing (707) the awaking the fingerprint recognition element,
wherein the second touch signal and the fourth touch signal are respectively generated when the touch object contacts the touch key and the adjacent touch key at the same time.

6. The method of any one of claims 1 to 5, further comprising:
setting an entire or a partial marginal region of the touch screen as a shielding region when the touch screen acquires the first touch signal.

7. A device for awaking an element, comprising:
an acquiring module (1120) configured to acquire a touch signal by a touch component;
a detecting module (1140) configured to detect whether the touch signal matches a preset condition; and
an awaking module (1160) configured to, if the touch signal matches the preset condition, awake a fingerprint recognition element (140).

8. The device of claim 7, wherein the touch component comprises a touch screen (122) and a touch key (124) located at a peripheral side of the touch screen (122); and the detecting module (1140) comprises:
a first detecting sub-module (1142) configured to detect whether a first touch signal acquired by the touch screen (122) matches a first preset condition; and
a second detecting sub-module (1144) configured to, if the first touch signal matches the first preset condition, detect whether a second touch signal acquired by the touch key (124) matches a second preset condition.

9. The device of claim 8, further comprising:
a key awaking sub-module configured to, if the first touch signal matches the first preset condition, awake the touch key (124) which, after being awoken, acquires the second touch signal.

10. The device of claim 8 or 9, wherein the fingerprint recognition element (140) is provided in the touch key (124); and
the device further comprises:
a first detecting module (1152) configured to detect, based on the second touch signal acquired by the touch key and a third touch signal acquired by the touch screen (122) at the same time, whether a touch object is located in a correct collecting position of the fingerprint recognition element (140); and
the awaking module (1160) configured to awake the fingerprint recognition element (140) when the touch object is located in the correct collecting position of the fingerprint recognition element (140),
wherein the second touch signal and the third touch signal are respectively generated when the touch object contacts the touch key (124) and the touch screen (122) at the same time.

11. The device of claim 8 or 9, wherein an adjacent touch key is provided at a peripheral side of the touch key; and
the device further comprises:
a second detecting module (1154) configured to, detect, based on the second touch signal acquired by the touch key and a fourth touch signal acquired by the adjacent touch key (125) at the same time, whether the touch object is located in the correct collecting position of the fingerprint recognition element (140); and
the awaking module (1160) configured to, when the touch object is located in the correct collecting position of the fingerprint recognition element (140), perform the awaking the fingerprint recognition element (140),
wherein the second touch signal and the fourth touch signal are respectively generated when the touch object contacts the touch key (124) and the adjacent touch key (125) at the same time.

12. The device of any one of claims 7 to 11, further comprising:
a shielding module (1180) configured to set an entire or a partial marginal region of the touch screen (122) as a shielding region when the touch screen (122) acquires the first touch signal.

13. A device for awaking an element, comprising:
a processor; and
a memory for storing instructions executable by the processor;
wherein the processor is configured to perform:
acquiring a touch signal by a touch component;
detecting whether the touch signal matches a preset condition; and
if the touch signal matches the preset condition, awaking a fingerprint recognition element.

14. A computer program including instructions for executing the steps of the method according to any one of claims 1 to 6 when said program is executed by a computer.

15. A recording medium readable by a computer and having recorded thereon the computer program according to claim 14.
